# EUROPEAN PATENT SPECIFICATION

(11) **EP 4 235 337 B1**
(45) Date of publication and mention of the grant of the patent: **14.08.2024**
(21) Application number: 22158187.9
(22) Date of filing: 23.02.2022
(51) Int. Cl.: G05D 1/00, G01S 17/931, G01S 17/89, E01F 9/30

(54) **A METHOD FOR LOCALIZING AND/OR MAPPING DURING OPERATION OF A VEHICLE IN AN ENVIRONMENT**
VERFAHREN ZUR ORTUNG UND/ODER KARTIERUNG WÄHREND DES BETRIEBS EINES FAHRZEUGS IN EINER UMGEBUNG
PROCÉDÉ PERMETTANT DE LOCALISER ET/OU DE CARTOGRAPHIER PENDANT LE FONCTIONNEMENT D'UN VÉHICULE DANS UN ENVIRONNEMENT

(43) Date of publication of application: 30.08.2023
(73) Proprietor: Volvo Autonomous Solutions AB, 405 08 Göteborg (SE)
(72) Inventor: KINDBERG, Josef, 423 49 Torslanda (SE)
(74) Representative: Valea AB

(56) References cited:
- DE-A1- 102018 217 734
- DE-A1- 102020 115 718
- US-A1- 2016 282 875
- US-A1- 2018 306 589
- SEFATI M ET AL: "Improving vehicle localization using semantic and pole-like landmarks", 2017 IEEE INTELLIGENT VEHICLES SYMPOSIUM (IV), IEEE, 11 June 2017 (2017-06-11), pages 13 - 19, XP033133682, DOI: 10.1109/IVS.2017.7995692

## Description

### TECHNICAL FIELD

The invention relates to a method for localizing and/or mapping during operation of a vehicle in an environment. The invention also relates to a control unit, a vehicle, a computer program and a computer readable medium.

The invention can be applied in heavy-duty vehicles, such as trucks, buses and construction equipment. Although the invention will be described with respect to a truck, the invention is not restricted to this particular vehicle, but may also be used in other vehicles such as work machines, including but not limited to wheel loaders, dump trucks, excavators etc.

### BACKGROUND

For an autonomous vehicle it is important to know its position when driving from one point to another in an environment. For this, there are a number of different techniques used to localize the vehicle. For example, a global navigation satellite system (GNSS) may be used. Additionally, or alternatively, the autonomous vehicle may be equipped with environmental perception sensors, such as light detection and ranging (LIDAR) sensors, radio detection and ranging (RADAR) sensors etc. for localizing the vehicle in the environment. These sensors may not only be used for localizing the vehicle in an already known environment, but they may additionally, or alternatively, be used for recording a map of the environment, i.e. the sensors may be used for mapping during operation of the vehicle.

An autonomous vehicle is a vehicle in which motion control is at least partly performed automatically, i.e. without the direct involvement of a human. The motion control may include at least one of steering control, braking control and propulsion control.

When localizing and/or mapping a vehicle in an environment by use of at least one environment perception sensor, the sensor may repetitively, or continuously, obtain measurements of the environment. By use of the measurements, the position within the environment can be obtained and/or a map of the environment can be generated. This technique is also known as simultaneous localizing and mapping (SLAM).

US2018306589A1, DE102020115718A1 and US2016282875A1 disclose different methods for localizing a vehicle by use of landmarks. In addition, the article with reference "SEFATI ET AL: "Improving vehicle localization using semantic and pole-like landmarks", IEEE INTELLIGENT VEHICLES SYMPOSIUM (IV), 11 June 2017, pages 13-19, XP033133682, DOI: 10.1109/IVS.2017.7995692" also discloses methods for localizing a vehicle by use of landmarks.

Even though using existing SLAM algorithms/techniques has shown to be very efficient and accurate for localizing and mapping a vehicle in an environment, there is still a strive to provide further improved techniques for localizing and/or mapping.

### SUMMARY

In view of the above, an object of the invention is to provide an improved method for localizing and/or mapping during operation of a vehicle in an environment, or at least to provide a suitable alternative. In particular, an object of the invention is to provide a more robust method for localizing the vehicle in the environment and/or for mapping the environment during operation of the vehicle. Other objects of the invention are to provide an improved control unit, vehicle, computer program and computer readable medium. According to a first aspect of the invention, at least one of the objects is achieved by a method according to claim 1. Thus, there is provided a method for localizing and/or mapping during operation of a vehicle in an environment, wherein the vehicle comprises at least one environment perception sensor for the localizing and/or mapping.

The method comprises:
- obtaining at least one measurement of the environment from the environment perception sensor,
- searching for and identifying a plurality of objects in the at least one measurement which correspond to a predefined pattern,
- in response to determining that the plurality of objects correspond to the predefined pattern, filtering the at least one measurement so that only the plurality of objects which correspond to the predefined pattern are used for the localizing and/or mapping, and
- localizing and/or mapping based on the filtered at least one measurement.

A measurement of the environment from the environment perception sensor may differ depending on the type of sensor used. For example, the at least one measurement of the environment may represent at least one scan of the environment. The at least one measurement may additionally, or alternatively, refer to at least one image of the environment.

A predefined pattern as used herein may be defined as a predefined form, shape and/or configuration which is repeated in a specific manner, and which can be observed and recognized by the at least one environment perception sensor.

By localizing as used herein means to obtain a position of the vehicle within the environment. The position may be a position which is defined in relation to a map of the environment. Localizing may also comprise obtaining an orientation of the vehicle in the environment. As such, according to an example embodiment, localizing may mean to obtain a pose of the vehicle in the environment. The map may be defined as a representation of the environment. By mapping as used herein means to generate, or record, a map of the environment. For example, the mapping may be performed when the vehicle moves in the environment. According to an example embodiment, localizing and/or mapping refers to SLAM.

By the provision of a method as disclosed herein, wherein the at least one measurement is filtered so that only the predefined pattern is used for the localizing and/or mapping, a more robust and reliable localizing and/or mapping during operation of the vehicle can be achieved. In particular, the present invention is based on a realization that in certain situations it may be difficult to localize the vehicle and/or map the environment with high accuracy. It has for example been realized that weather conditions may result in slight, or minor, changes of the environment. By way of example, a ground surface shape may have changed due to a snowfall. As such, if the vehicle is trying to localize in the environment where it earlier localized by using a snow-free ground surface, the slight changes of the ground surface caused by the snowfall may result in a localizing error. By using the method according to the present invention, the vehicle can localize and/or map the environment by only using the plurality of objects corresponding to the predefined pattern. This implies improved accuracy during localizing and/or mapping. Other examples of situations when an environment has changed slightly over time are changes caused by growing grass, growing plants, growing trees, leaves falling off trees etc. By the method as disclosed herein, such slight environmental changes can be disregarded, implying a reduced risk of any localizing errors.

Optionally, the predefined pattern is further defined by a plurality of static objects, i.e. objects which are not moving.

According to the invention, the predefined pattern is defined by a plurality of separate objects which are offset from each other. This implies a more robust identification of the predefined pattern. In other words, it may be easier to search for and identify a plurality of separate objects which are offset from each other, in comparison to a plurality of objects which are not offset from each other. Furthermore, the separate objects are offset from each other by a minimum distance and/or by a maximum distance. This implies further facilitated identification of the plurality of objects. In other words, by searching for a plurality of objects which are offset from each other by a minimum distance and/or by a maximum distance, faster and more reliable identification of the predefined pattern may be achieved. This also implies reduced processing power. According to the invention, a minimum distance and a maximum distance between the plurality of objects define a predefined range, wherein the predefined pattern is identified when the plurality of objects are offset from each other according to the predefined range. For example, the predefined pattern is identified when the plurality of objects are placed with respect to each other by relative distances corresponding to the predefined range. A predefined range implies a more flexible method. For example, a user may manually place the plurality of objects in the environment. Thereby, it may suffice if the user places the plurality of objects according to the predefined range. Thus, this implies a reduced required accuracy when the user manually places the plurality of objects in the environment.

Optionally, the predefined pattern is further defined by a predefined shape of each one of the plurality of objects. This implies further facilitated identification of the plurality of objects.

Still optionally, the predefined shape is defined by at least one of the following:
- a height of an object from a ground surface,
- a width of an object,
- a length of an object,
- a radius or radii profile of an object.

Optionally, the predefined shape is at least partly any one of a cylinder shape, such as a pole, a cone shape, a spherical shape, a circular or oval shape, a triangle shape, a rectangle shape and a square shape. Such shapes imply easy and reliable identification. For example, if using a shape which is rare in nature, it may be easier to distinguish the object in the at least one measurement.

Optionally, identifying the plurality of objects in the at least one measurement comprises identifying a machine-readable visual identifier on at least one of the plurality of objects which fulfils a predefined identification criterion. This implies further facilitated identification of the objects. Still optionally, the predefined identification criterion is at least one of a predefined one-dimensional pattern, such as a predefined barcode, and/or a predefined two-dimensional pattern, such as a predefined QR code.

Optionally, the predefined pattern is defined by at least three objects. Using at least three objects, preferably at least three separate and offset objects, implies facilitated identification. For example, three objects, and their relative position, may be varied to a larger extent than only two objects. As such, a more unique pattern may be accomplished by using at least three objects.

Optionally, the at least three objects form a triangle pattern or a substantially linear pattern.

Optionally, the predefined pattern is further defined in that at least one object of the plurality of objects is surrounded by a free space which fulfils a predefined free space criterion. This also implies further facilitated identification. The free space criterion may for example be defined by a radius with respect to the object, wherein a center point for the radius is associated with the object. The radius may for example be 0.5 m or more, such as 1 m or more.

According to a second aspect of the invention, at least one of the objects is achieved by a control unit according to claim 11. Thus, there is provided a control unit for localizing and/or mapping during operation of a vehicle in an environment. The control unit is configured to perform the steps of the method according to any embodiment of the first aspect of the invention.

Advantages and effects of the second aspect are analogous to advantages and effects of the first aspect of the invention. It shall also be noted that all embodiments of the first aspect are combinable with all embodiments of the second aspect, and vice versa.

According to a third aspect of the invention, at least one of the objects is achieved by a vehicle according to claim 12 or a system according to claim 13. Thus, there is provided a vehicle comprising at least one environment perception sensor for localizing and/or mapping, wherein the vehicle further comprises the control unit according to any one of the embodiments of the second aspect and/or is in communicative contact with a control unit according to any one of the embodiments of the second aspect.

Advantages and effects of the third aspect are analogous to advantages and effects of the first and second aspects of the invention. It shall also be noted that all embodiments of the third aspect are combinable with all embodiments of the first and second aspects, and vice versa.

According to a fourth aspect, at least one of the objects is achieved by a computer program according to claim 14. Thus, there is provided a computer program comprising program code means for performing the method of any embodiment according to the first aspect when said program is run on a computer, such as on the control unit according to the second aspect.

According to a fifth aspect, at least one of the objects is achieved by a computer readable medium according to claim 15. Thus, there is provided a computer readable medium carrying a computer program comprising program code means for performing the method of any embodiment according to the first aspect when said program product is run on a computer, such as on the control unit according to the second aspect.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of a vehicle according to an example embodiment of the present invention,
Fig. 2 is a schematic and perspective view of a road section where the vehicle as shown in fig. 1 is expected to travel,
Fig. 3 is a flowchart of a method according to an example embodiment of the invention,
Fig. 4 is a schematic view of an object forming part of a predefined pattern according to an example embodiment of the present invention,
Figs. 5a and 5b are schematic views of predefined patterns according to example embodiments of the present invention.

### DETAILED DESCRIPTION OF EXAMPLE EMBODIMENTS OF THE INVENTION

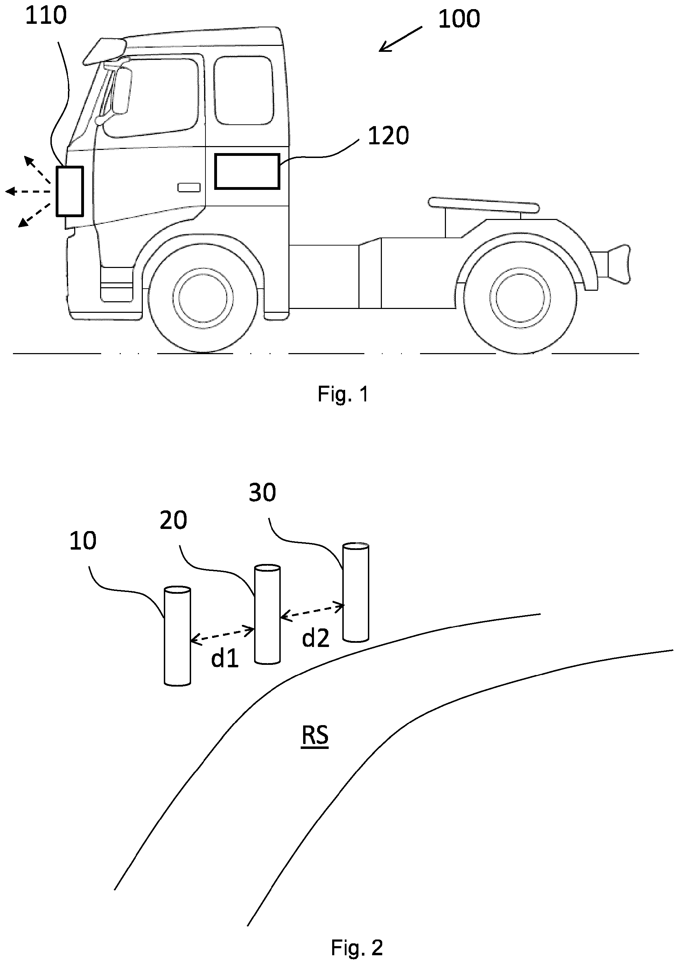

Fig. 1 depicts a vehicle 100 in the form of a truck. In the shown embodiment, the truck 100 is a towing truck for towing a trailer (not shown). It shall be understood that the invention is not restricted to only this type of vehicle, but may advantageously be used for other vehicles, including but not limited to other trucks, buses, construction equipment, such as wheel loaders, dump trucks, excavators etc. The vehicle 100 is preferably an autonomous vehicle using SLAM for localizing and/or mapping during operation. The vehicle 100 may also be equipped with other means for localizing the vehicle 100, such as GNSS. However, GNSS may not always function properly. Thereby, by using localizing and/or mapping according to the method as disclosed herein, a more reliable and robust method is achieved. This also implies redundancy, i.e. more than one procedure may be used for the localizing and/or mapping.

In the shown embodiment, the vehicle 100 comprises an environment perception sensor 110. The shown sensor 110 is here a LIDAR. However, as mentioned in the above, also other types of sensors may be used. The vehicle 100 typically comprises more than one environment perception sensor for obtaining a measurement which results in a representation of the environment.

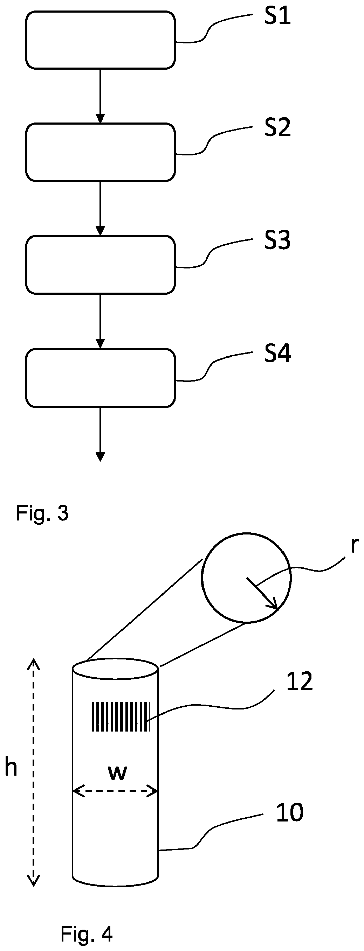

In the shown embodiment, the vehicle 100 further comprises a control unit 120. The control unit is configured to perform the steps of a method according to the first aspect of the invention. An embodiment of the method will be described in the below with respect to the flowchart shown in fig. 3.

The control unit 120 is an electronic control unit and may comprise processing circuitry which is adapted to run a computer program as disclosed herein. The control unit 120 may comprise hardware and/or software for performing the method according to the invention. In an embodiment the control unit 120 may be denoted a computer. The control unit 120 may be constituted by one or more separate sub-control units. In addition, the control unit 120 may communicate with the sensor 110 by use of wired and/or wireless communication means. The control unit 120 is herein part of the vehicle 100 as shown in fig. 1. Alternatively, the control unit 120 may be part of another vehicle entity. Still further, even though the control unit 120 preferably is a vehicle on-board control unit 120, it shall be noted that the control unit may additionally or alternatively be a vehicle off-board control unit, such as a control unit being part of a computer cloud system.

With respect to especially figs. 1, 2 and 3, a method according to an example embodiment of the invention will be described. Fig. 2 illustrates a perspective view of a road section RS along which the vehicle 100 is intended to be guided by use of SLAM. At a side of the road section RS, a plurality of objects 10, 20, 30 can be seen.

The method comprises:
S1: obtaining at least one measurement of the environment from the environment perception sensor 110. The measurement performed by the LIDAR sensor 110 is at least one scan of the environment.

The method further comprises
S2: searching for and identifying a plurality of objects 10, 20, 30 in the at least one measurement which correspond to a predefined pattern, and
- in response to determining that the plurality of objects correspond to the predefined pattern, S3: filtering the at least one measurement so that only the plurality of objects which correspond to the predefined pattern are used for the localizing and/or mapping.

The method further comprises:
S4: localizing and/or mapping based on the filtered at least one measurement.

In fig. 2, which is a schematic and simplified illustration of the environment, only the three objects 10, 20, 20 forming the predefined pattern are shown. However, it shall be understood that the at least one measurement will include a large amount of different objects, elements etc. (not shown). Accordingly, by use of the method, other objects, elements etc. which are not part of the predefined pattern are filtered out. Thereby, a filtered measurement, or scan, may be provided, as represented in fig. 2. As shown, the predefined pattern is here defined by three objects, 10, 20, 30 which are offset from each other by respective distances d1, d2.

By use of the method, a more reliable and robust localizing and/or mapping of the environment is achieved, implying e.g. improved position/pose accuracy. Consequently, as a result, the accuracy during guiding of the vehicle 100 along the road section RS can be improved.

According to an example embodiment of the invention, the method may further comprise guiding the vehicle 100 from one point to another point by use of the localizing and/or mapping as disclosed herein.

As shown in e.g. fig. 2, the predefined pattern may be defined by a plurality of static objects 10, 20, 30. Accordingly, the method comprises searching for and identifying a plurality of static objects 10, 20, 30 in the at least one measurement, i.e. objects which are not moving. Thereby, moving objects, such as other road users, e.g. vehicles, pedestrians etc., can be filtered out.

As further shown in e.g. fig. 2, the predefined pattern may be defined by a plurality of separate objects 10, 20, 30 which are offset from each other. Accordingly, the plurality of objects 10, 20, 30 may be separated from each other by respective distances as already mentioned in the above. In the embodiment shown in fig. 2, the objects 10 and 20 are separated by a distance d1 and the objects 20 and 30 are separated by a distance d2. The separate objects 10, 20, 30 may be offset from each other by a minimum distance and/or by a maximum distance. Accordingly, by way of example, each one of the distances d1 and d2 may fall within a predefined range which is defined by the minimum distance and the maximum distance. For example, the minimum distance may be 0.5 m and the maximum distance may be 2 m, such as a predefined range of 0.5-1 m.

Fig. 4 depicts one of the objects 10 which are part of the predefined pattern as shown in fig. 2. Fig. 4 further shows that the predefined pattern may additionally or alternatively be identified by specific characteristics of each object.

For example, the predefined pattern may be defined by a predefined shape of each one of the plurality of objects 10, 20, 30. Fig. 4 depicts that the object 10 has a specific height h from a ground surface, a width w and a radius r. Additionally, or alternatively, the predefined shape may be defined by a length of the object.

In the shown embodiment, the predefined shape is a cylinder shape. More specifically, the object 10 as shown in fig. 4 is a pole. However, also other shapes are conceivable, such as a cone shape, a spherical shape, a circular or oval shape, a triangle shape, a rectangle shape and a square shape. For example, it may be advantageous to use a shape which does not resemble other elements in nature, e.g. trees, rocks, stones etc.

Additionally, or alternatively, at least one of the objects 10 may comprise a machine-readable visual identifier 12. Accordingly, identifying the plurality of objects 10, 20, 30 in the at least one measurement may comprises identifying the machine-readable visual identifier 12 on at least one of the plurality of objects which fulfils a predefined identification criterion. In the shown embodiment, the predefined identification criterion is a predefined one-dimensional pattern, in this case a predefined barcode. Also other machine-readable visual identifiers are conceivable, such as a QR code (not shown) with a predefined two-dimensional pattern.

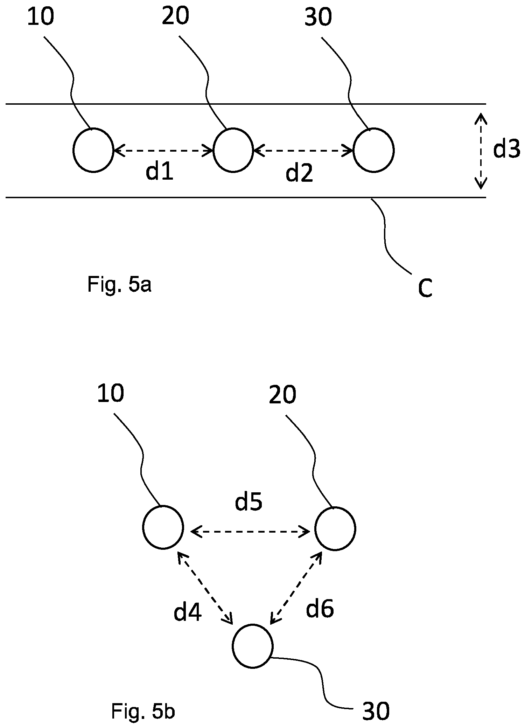

Figs. 5a and 5b show schematic views from above of a plurality of objects 10, 20, 30 which correspond to a predefined pattern according to the invention. In both illustrations, the predefined pattern is defined by three separate objects which are offset from each other.

With reference to fig. 5a, the three objects 10, 20, 30 may form a substantially linear pattern. For example, the substantially linear pattern may be defined by a corridor, or aisle, C which has a width corresponding to a predefined distance d3. Accordingly, the plurality of objects 10, 20, 30 are considered to be part of the predefined pattern if they are provided in the corridor C. By allowing the corridor C to have a relatively large width d3, such as 1-2 m, a user may place the objects 10, 20, 30 with a relatively low accuracy along an imaginary line. Furthermore, by also allowing the distances d1 and d2 to have a span which fulfils a predefined range as mentioned in the above, the user may only need to make a very rough estimation when placing the objects in the environment.

As another example, with reference to fig 5b, the three objects 10, 20, 30 may form a triangle pattern. Relative distances, d4, d5, d6 between the objects 10, 20, 30 may also fall within a predefined range as mentioned in the above.

The predefined pattern may additionally or alternatively be defined in that at least one object of the plurality of objects 10, 20, 30 is surrounded by a free space which fulfils a predefined free space criterion. For example, a user may place the objects so that they are surrounded by a free space which fulfils the predefined free space criterion. Thereby it may be easier for the at least one environment perception sensor 110 to identify the objects 10, 20, 30 when searching for the objects in the at least one measurement.

It shall be understood that any one or any combination of the above-mentioned characteristics may be used for identifying the predefined pattern.

It is to be understood that the present invention is not limited to the embodiments described above and illustrated in the drawings; rather, the skilled person will recognize that many changes and modifications may be made within the scope of the appended claims.

## Claims

1. A method performed by a control unit (120) for localizing and/or mapping during operation of a vehicle (100) in an environment, wherein the vehicle (100) comprises at least one environment perception sensor (110) for the localizing and/or mapping, the method comprising:
- obtaining (S1) at least one measurement of the environment from the environment perception sensor (110),
- searching for and identifying (S2) a plurality of objects (10, 20, 30) in the at least one measurement which plurality of objects (10, 20, 30) correspond to a predefined pattern,
- in response to determining that the plurality of objects correspond to the predefined pattern, filtering (S3) the at least one measurement so that only the plurality of objects which correspond to the predefined pattern are used for the localizing and/or mapping, and
- localizing and/or mapping (S4) based on the filtered at least one measurement,
wherein the predefined pattern is defined by a plurality of separate objects (10, 20, 30) which are offset from each other, wherein the separate objects (10, 20, 30) are offset from each other by a minimum distance and by a maximum distance, **characterized in that**,
the minimum distance and the maximum distance between the plurality of objects define a predefined range, wherein the predefined pattern is identified when the plurality of objects are offset from each other according to the predefined range.

2. The method according to claim 1, wherein the predefined pattern is further defined by a plurality of static objects (10, 20, 30).

3. The method according to any one of the preceding claims, wherein the predefined pattern is further defined by a predefined shape of each one of the plurality of objects (10, 20 30).

4. The method according to claim 3, wherein the predefined shape is defined by at least one of the following:
- a height of an object from a ground surface,
- a width of an object,
- a length of an object,
- a radius or radii profile of an object.

5. The method according to any one of claims 3 or 4, wherein the predefined shape is at least partly any one of a cylinder shape, such as a pole, a cone shape, a spherical shape, a circular or oval shape, a triangle shape, a rectangle shape and a square shape.

6. The method according to any one of the preceding claims, wherein identifying the plurality of objects (10, 20, 30) in the at least one measurement comprises identifying a machine-readable visual identifier on at least one of the plurality of objects which fulfils a predefined identification criterion.

7. The method according to claim 6, wherein the predefined identification criterion is at least one of a predefined one-dimensional pattern, such as a predefined barcode, and/or a predefined two-dimensional pattern, such as a predefined QR code.

8. The method according to any one of the preceding claims, wherein the predefined pattern is defined by at least three objects (10, 20, 30).

9. The method according to claim 8, wherein the at least three objects (10, 20, 30) form a triangle pattern or a substantially linear pattern.

10. The method according to any one of the preceding claims, wherein the predefined pattern is further defined in that at least one object of the plurality of objects (10, 20, 30) is surrounded by a free space which fulfils a predefined free space criterion.

11. A control unit (120) for localizing and/or mapping during operation of a vehicle (100) in an environment, the control unit being configured to perform the steps of the method according to any one of claims 1-10.

12. A vehicle (100) comprising at least one environment perception sensor (110) for localizing and/or mapping, wherein the vehicle further comprises the control unit (120) according to claim 11.

13. A system comprising a vehicle (100) and a control unit (12) according to claim 11, wherein the vehicle (100) comprises at least one environment perception sensor (110) for localizing and/or mapping, and wherein the vehicle (100) is in communicative contact with the control unit (120).

14. A computer program comprising program code means for performing the method of any of claims 1-10 when said program is run on a computer, such as on the control unit (120) according to claim 11.

15. A computer readable medium carrying a computer program comprising program code means for performing the method of any of claims 1-10 when said program product is run on a computer, such as on the control unit (120) according to claim 11.

## Patentansprüche

1. Verfahren, das durch eine Steuereinheit (120) durchgeführt wird, zum Lokalisieren und/oder Zuordnen während eines Betriebs eines Fahrzeugs (100) in einem Umfeld, wobei das Fahrzeug (100) mindestens einen Umfeldwahrnehmungssensor (110) für das Lokalisieren und/oder das Zuordnen umfasst, das Verfahren umfassend:
- Erhalten (S1) mindestens einer Messung des Umfelds von dem Umfeldwahrnehmungssensor (110),
- Suchen nach und Identifizieren (S2) einer Vielzahl von Objekten (10, 20, 30) in der mindestens einen Messung, wobei die Vielzahl von Objekten (10, 20, 30) einem vordefinierten Muster entsprechen,
- als Reaktion auf ein Bestimmen, dass die Vielzahl von Objekten dem vordefinierten Muster entsprechen, Filtern (S3) der mindestens einen Messung, sodass nur die Vielzahl von Objekten, die dem vordefinierten Muster entsprechen, für das Lokalisieren und/oder das Zuordnen verwendet werden, und
- Lokalisieren und/oder Zuordnen (S4) basierend auf der gefilterten mindestens einen Messung, wobei das vordefinierte Muster durch eine Vielzahl von separaten Objekten (10, 20, 30) definiert ist, die voneinander versetzt sind, wobei die separaten Objekte (10, 20, 30) um einen Mindestabstand und um einen Höchstabstand voneinander versetzt sind, **dadurch gekennzeichnet, dass** der Mindestabstand und der Höchstabstand zwischen der Vielzahl von Objekten einen vordefinierten Bereich definieren, wobei das vordefinierte Muster identifiziert wird, wenn die Vielzahl von Objekten gemäß dem vordefinierten Bereich voneinander versetzt sind.

2. Verfahren nach Anspruch 1, wobei das vordefinierte Muster ferner durch eine Vielzahl von statischen Objekten (10, 20, 30) definiert ist.

3. Verfahren nach einem der vorstehenden Ansprüche, wobei das vordefinierte Muster ferner durch eine vordefinierte Form jedes der Vielzahl von Objekten (10, 20, 30) definiert ist.

4. Verfahren nach Anspruch 3, wobei die vordefinierte Form durch mindestens eines von dem Folgenden definiert ist:
- einer Höhe eines Objekts von der Bodenoberfläche,
- einer Breite eines Objekts,
- einer Länge eines Objekts,
- einem Radius oder einem Radienprofil eines Objekts.

5. Verfahren nach einem der Ansprüche 3 oder 4, wobei die vordefinierte Form mindestens teilweise eine beliebige einer Zylinderform, wie etwa einer Stange, einer Kegelform, einer Kugelform, einer Kreis- oder Ovalform, einer Dreiecksform, einer Rechteckform oder einer Quadratform, ist.

6. Verfahren nach einem der vorstehenden Ansprüche, wobei das Identifizieren der Vielzahl von Objekten (10, 20, 30) in der mindestens einen Messung das Identifizieren eines maschinenlesbaren visuellen Bezeichners auf mindestens einem der Vielzahl von Objekten umfasst, das ein vordefiniertes Identifizierungskriterium erfüllt.

7. Verfahren nach Anspruch 6, wobei das vordefinierte Identifizierungskriterium mindestens eines von einem vordefinierten eindimensionalen Muster, wie etwa einem vordefinierten Barcode, und/oder einem vordefinierten zweidimensionalen Muster, wie etwa einem vordefinierten QR-Code, ist.

8. Verfahren nach einem der vorstehenden Ansprüche, wobei das vordefinierte Muster durch mindestens drei Objekte (10, 20, 30) definiert ist.

9. Verfahren nach Anspruch 8, wobei die mindestens drei Objekte (10, 20, 30) ein Dreiecksmuster oder ein im Wesentlichen lineares Muster ausbilden.

10. Verfahren nach einem der vorstehenden Ansprüche, wobei das vordefinierte Muster ferner dadurch definiert ist, dass mindestens ein Objekt der Vielzahl von Objekten (10, 20, 30) durch einen Freiraum umgeben ist, der ein vordefiniertes Freiraumkriterium erfüllt.

11. Steuereinheit (120) zum Lokalisieren und/oder Zuordnen während des Betriebs eines Fahrzeugs (100) in einem Umfeld, wobei die Steuereinheit konfiguriert ist, um die Schritte des Verfahrens nach einem der Ansprüche 1 bis 10 durchzuführen.

12. Fahrzeug (100), umfassend mindestens einen Umfeldwahrnehmungssensor (110) zum Lokalisieren und/oder Zuordnen, wobei das Fahrzeug ferner die Steuereinheit (120) nach Anspruch 11 umfasst.

13. System, umfassend ein Fahrzeug (100) und eine Steuereinheit (12) nach Anspruch 11, wobei das Fahrzeug (100) mindestens einen Umfeldwahrnehmungssensor (110) zum Lokalisieren und/oder Zuordnen umfasst, und wobei das Fahrzeug (100) in Kommunikationskontakt mit der Steuereinheit (120) ist.

14. Computerprogramm, umfassend Programmcodemittel zum Durchführen des Verfahrens nach einem der Ansprüche 1 bis 10, wenn das Programm auf einem Computer, wie etwa auf der Steuereinheit (120) nach Anspruch 11, ausgeführt wird.

15. Computerlesbares Medium, das ein Computerprogramm trägt, umfassend Programmcodemittel zum Durchführen des Verfahrens nach einem der Ansprüche 1 bis 10, wenn das Programmprodukt auf einem Computer, wie etwa auf der Steuereinheit (120) nach Anspruch 11, ausgeführt wird.

## Revendications

1. Procédé réalisé par une unité de commande (120) pour la localisation et/ou la cartographie pendant le fonctionnement d'un véhicule (100) dans un environnement, dans lequel le véhicule (100) comprend au moins un capteur de perception de l'environnement (110) pour la localisation et/ou la cartographie, le procédé comprenant :
- l'obtention (S1) d'au moins une mesure de l'environnement à partir du capteur de perception de l'environnement (110),
- la recherche et l'identification (S2) d'une pluralité d'objets (10, 20, 30) dans l'au moins une mesure, laquelle pluralité d'objets (10, 20, 30) correspond à un motif prédéfini,
- en réponse à la détermination que la pluralité d'objets correspond au motif prédéfini, le filtrage (S3) de l'au moins une mesure de sorte que seule la pluralité d'objets correspondant au motif prédéfini sont utilisés pour la localisation et/ou la cartographie, et
- la localisation et/ou la cartographie (S4) en fonction de l'au moins une mesure filtrée, dans lequel le motif prédéfini est défini par une pluralité d'objets (10, 20, 30) distincts qui sont décalés les uns par rapport aux autres, dans lequel les objets (10, 20, 30) distincts sont décalés les uns par rapport aux autres d'une distance minimale et d'une distance maximale, **caractérisé en ce que** la distance minimale et la distance maximale entre la pluralité d'objets définissent une plage prédéfinie, dans lequel le motif prédéfini est identifié lorsque la pluralité d'objets sont décalés les uns par rapport aux autres selon la plage prédéfinie.

2. Procédé selon la revendication 1, dans lequel le motif prédéfini est en outre défini par une pluralité d'objets (10, 20, 30) statiques.

3. Procédé selon l'une quelconque des revendications précédentes, dans lequel le motif prédéfini est en outre défini par une forme prédéfinie de chaque objet de la pluralité d'objets (10, 20, 30).

4. Procédé selon la revendication 3, dans lequel la forme prédéfinie est définie par au moins l'un des éléments suivants :
- une hauteur d'un objet par rapport à la surface du sol,
- une largeur d'un objet,
- une longueur d'un objet,
- un rayon ou un profil de rayon d'un objet.

5. Procédé selon l'une quelconque des revendications 3 ou 4, dans lequel la forme prédéfinie est au moins en partie l'une quelconque d'une forme de cylindre, tel qu'un poteau, une forme de cône, une forme sphérique, une forme circulaire ou ovale, une forme de triangle, une forme de rectangle et une forme de carré.

6. Procédé selon l'une quelconque des revendications précédentes, dans lequel l'identification de la pluralité d'objets (10, 20, 30) dans l'au moins une mesure comprend l'identification d'un identificateur visuel lisible par machine sur au moins un objet de la pluralité d'objets qui répond à un critère d'identification prédéfini.

7. Procédé selon la revendication 6, dans lequel le critère d'identification prédéfini est au moins l'un d'un motif unidimensionnel prédéfini, tel qu'un code-barres prédéfini, et/ou un motif bidimensionnel prédéfini, tel qu'un code QR prédéfini.

8. Procédé selon l'une quelconque des revendications précédentes, dans lequel le motif prédéfini est défini par au moins trois objets (10, 20, 30).

9. Procédé selon la revendication 8, dans lequel les au moins trois objets (10, 20, 30) forment un motif de triangle ou un motif sensiblement linéaire.

10. Procédé selon l'une quelconque des revendications précédentes, dans lequel le motif prédéfini est en outre défini par le fait qu'au moins un objet de la pluralité d'objets (10, 20, 30) est entouré d'un espace libre répondant à un critère prédéfini d'espace libre.

11. Unité de commande (120) pour la localisation et/ou la cartographie pendant le fonctionnement d'un véhicule (100) dans un environnement, l'unité de commande étant configurée pour exécuter les étapes du procédé selon l'une quelconque des revendications 1 à 10.

12. Véhicule (100) comprenant au moins un capteur de perception de l'environnement (110) pour la localisation et/ou la cartographie, dans lequel le véhicule comprend en outre l'unité de commande (120) selon la revendication 11.

13. Système comprenant un véhicule (100) et une unité de commande (12) selon la revendication 11, dans lequel le véhicule (100) comprend au moins un capteur de perception de l'environnement (110) pour la localisation et/ou la cartographie, et dans lequel le véhicule (100) est en contact de communication avec l'unité de commande (120).

14. Programme informatique comprenant des moyens de code de programme pour la réalisation du procédé selon l'une quelconque des revendications 1 à 10 lorsque ledit programme est exécuté sur un ordinateur, tel que sur l'unité de commande (120) selon la revendication 11.

15. Support lisible par ordinateur portant un programme informatique comprenant des moyens de code de programme pour la réalisation du procédé selon l'une quelconque des revendications 1 à 10 lorsque ledit produit de programme est exécuté sur un ordinateur, tel que sur l'unité de commande (120) selon la revendication 11.
